# EUROPÄISCHE PATENTSCHRIFT

(11) **EP 3 504 595 B1**
(45) Veröffentlichungstag und Bekanntmachung des Hinweises auf die Patenterteilung: **03.11.2021**
(21) Anmeldenummer: 17754151.3
(22) Anmeldetag: 16.08.2017
(51) Int. Cl.: G05B 13/02

(54) **VERFAHREN ZUM STEUERN UND/ODER REGELN EINES SOLARTHERMISCHEN KRAFTWERKS UND SOLARTHERMISCHES KRAFTWERK**
METHOD FOR CONTROLLING AND/OR REGULATING OF A SOLAR THERMAL POWER PLANT, AND SOLAR THERMAL POWER PLANT
PROCÉDÉ DE COMMANDE ET/OU DE RÉGULATION D'UNE CENTRALE SOLAIRE THERMIQUE ET CENTRALE SOLAIRE THERMIQUE

(30) Priorität: 24.08.2016 DE 102016115679; 26.09.2016 DE 102016118131
(43) Veröffentlichungstag der Anmeldung: 03.07.2019
(73) Patentinhaber: Deutsches Zentrum für Luft- und Raumfahrt e.V., 51147 Köln (DE)
(72) Erfinder: DO AMARAL BURGHI, Ana Carolina, 70469 Stuttgart (DE); NOURELDIN, Kareem, 71032 Böblingen (DE)
(74) Vertreter: Hoeger, Stellrecht & Partner Patentanwälte mbB
(86) Internationale Anmeldenummer: PCT/EP2017/070704
(87) Internationale Veröffentlichungsnummer: WO 2018/036872

(56) Entgegenhaltungen:
- CN-A- 101 871 638
- US-A1- 2010 206 295
- RAÚL MORALES ET AL: "Supervisory Fuzzy Predictive Control for a Concentrated Solar Power Plant", PROCEEDINGS OF THE 19TH WORLD CONGRESS THE INTERNATIONAL FEDERATION OF AUTOMATIC CONTROL; CAPE TOWN, SA, AUGUST 24-29, 2014, Bd. 47, Nr. 3, 24. August 2014 (2014-08-24), Seiten 1459-1464, XP055421935, Red Hook, NY ISSN: 1474-6670, DOI: 10.3182/20140824-6-ZA-1003.01064 ISBN: 978-1-123-47890-7
- GORDILLO F ET AL: "Genetic design of a fuzzy logic controller for a solar power plant", 1997 EUROPEAN CONTROL CONFERENCE (ECC), IEEE, 1. Juli 1997 (1997-07-01), Seiten 1003-1008, XP032761699, ISBN: 978-3-9524269-0-6 [gefunden am 2015-04-08]
- ALATA M ET AL: "Developing a multipurpose sun tracking system using fuzzy control", ENERGY CONVERSION AND MANAGEMENT, ELSEVIER SCIENCE PUBLISHERS, OXFORD, GB, Bd. 46, Nr. 7-8, 1. Mai 2005 (2005-05-01), Seiten 1229-1245, XP027856089, ISSN: 0196-8904 [gefunden am 2005-05-01]
- LIPP H P: "MEHR FLEXIBILITAET DURCH UNSCHAERFE", TECHNISCHE RUNDSCHAU,, Bd. 85, Nr. 24, 18. Juni 1993 (1993-06-18) , Seiten 28-33, XP000378570, ISSN: 1023-0823
- Ra?l Morales ET AL: "Supervisory Fuzzy Predictive Control for a Concentrated Solar Power Plant", IFAC the 2012 IFAC Workshop on Automatic Control in Offshore Oil and Gas Production, vol. 47, no. 3, 24 August 2014 (2014-08-24), pages 1459-1464, XP055421935, Red Hook, NY ISSN: 1474-6670, DOI: 10.3182/20140824-6-ZA-1003.01064 ISBN: 978-1-123-47890-7

## Beschreibung

Die Erfindung betrifft ein Verfahren zur Steuerung und/oder Regelung eines solarthermischen Kraftwerks, welches mindestens eine Einheit mit einem Eingangsventil und mit mindestens einem Solarkollektor umfasst.

Die Erfindung betrifft ferner ein solarthermisches Kraftwerk, umfassend mindestens eine Einheit mit einem Eingangsventil und mit mindestens einem Solarkollektor, und eine Steuerungs- und/oder Regelungseinrichtung.

Die CN 101871638 A offenbart ein Kontrollverfahren zur Erzeugung von überhitztem Dampf an einem solarthermischen Kraftwerk im Zusammenhang mit einem Verfahren zum Schützen einer Ausrüstung, wobei ein Fuzzy-Verfahren verwendet wird.

Der Artikel RAÜL MORALES ET AL: "Supervisory Fuzzy Predictive Control for a Concentrated Solar Power Plant", PROCEEDINGS OF THE 19TH WORLD CONGRESS THE INTERNATIONAL FEDERATION OF AUTOMATIC CONTROL; CAPE TOWN, SA, AUGUST 24-29, 2014, Bd. 47, Nr. 3, 24. August 2014, Seiten 1459-1464, XP055421935 beschäftigt sich mit dem Design und der Leistungsbewertung eines Controllers in einem Überwachungsmodus für ein auf konzentrierter Solarstrahlung basierendem Kraftwerk, wobei der Controller ein "Fuzzy Predictive Controller" ist.

Der Artikel GORDILLO F ET AL: "Genetic design of a fuzzy logic controller for a solar power plant", 1997 EUROPEAN CONTROL CONFERENCE (ECC), IEEE, 1. Juli 1997, Seiten 1003-1008, XP032761699 offenbart einen Fuzzy Logic-Controller für ein verteiltes Kollektorfeld eines Solarkraftwerks.

Der Artikel ALATA M ET AL: "Developing a multipurpose sun tracking system using fuzzy control", ENERGY CONVERSION AND MANAGEMENT; ELSEVIER SCIENCE PUBLISHERS, OXFORD, GB, Bd. 46, Nr. 7-8, 1. Mai 2005, Seiten 1229-1245, XP027856089 beschäftigt sich mit dem Design und der Simulation von Sonnen-Trackingsystemen.

Die US 2010/206295 A1 offenbart ein Verfahren zur Erzeugung thermischer Energie, bei dem eine sequenzielle Reihe von solarthermischen zweidimensionalen Konzentratoren bei einer gewünschten Arbeitstemperatur betrieben werden, eine Maß für die gesammelte thermische Energie erhalten wird und ein Fluss eines Wärmetransferfluids automatisch als Funktion des Maßes der gesammelten thermischen Energie eingestellt wird, wobei der Fluss so automatisch eingestellt wird, dass die Arbeitstemperatur erhalten bleibt. Der Erfindung liegt die Aufgabe zugrunde, ein Verfahren der eingangs genannten Art bereitzustellen, welches insbesondere bezüglich transienten solaren Einstrahlungsbedingungen robust ist.

Diese Aufgabe wird bei dem eingangs genannten Verfahren erfindungsgemäß dadurch gelöst, dass für die mindestens eine Einheit Eingangsparameter erfasst werden, welche umfassen (i) eine Tageszeit, (ii) eine Temperatur, welche eine Ausgangstemperatur von Wärmeträgerfluid an der mindestens einen Einheit charakterisiert, (iii) eine Größe, welche solare Einstrahlungsbedingungen charakterisiert und (iv) einen Eingangsventilparameter, welcher eine Öffnungsfläche an dem Eingangsventil charakterisiert, bei dem den Eingangsparametern in einer Fuzzifizierungseinrichtung gemäß einem ersten Regelsatz jeweilige Fuzzy-Mengen-Parameter zugeordnet werden, bei dem eine Inferenzeinrichtung die Fuzzy-Mengen-Parameter gemäß einem zweiten Regelsatz verknüpft und auswertet und Fuzzy-Mengen-Ergebnisparameter erzeugt werden und bei dem in einer Defuzzifizierungseinrichtung aus Fuzzy-Mengen-Ergebnisparametern Ausgabeparameter gemäß einem dritten Regelsatz erzeugt werden, welche umfassen: (i) einen Öffnungsparameter, welcher eine Öffnung des Eingangsventils bestimmt und (ii) einen Fokussierungsparameter, welcher eine Fokussierung des mindestens einen Solarkollektors bestimmt, und dass mittels mindestens einem Ausgangsparameter die mindestens eine Einheit angesteuert und/oder eingestellt wird.

Bei der erfindungsgemäßen Lösung werden (mindestens) vier bestimmte Eingangsparameter erfasst, durch die Fuzzifizierungseinrichtung werden gemäß einem ersten Regelsatz (Zugehörigkeitsfunktionen der Fuzzifizierung) Fuzzy-Mengen-Parameter für die jeweiligen Eingangsparameter erzeugt und über die Inferenzeinrichtung erfolgt eine Verknüpfung und Auswertung gemäß einem zweiten Regelsatz (den Fuzzy-Regeln). Über die Defuzzifizierungseinrichtung werden wieder "physikalisch" verwertbare Ausgabeparameter ("Werte") gemäß einem dritten Regelsatz (den Zugehörigkeitsfunktionen der Defuzzifizierung) erzeugt, welche für die Ansteuerung der mindestens einen Einheit verwendet werden.

Bei der erfindungsgemäßen Lösung sind dabei der Öffnungsparameter, welcher eine Öffnung des Eingangsventils bestimmt, und der Fokussierungsparameter, welcher eine Fokussierung des mindestens einen Solarkollektors bestimmt, miteinander verknüpft. Die Verknüpfung erfolgt in dem entsprechenden Steuerungs- und/oder Regelungsverfahren.

Durch Verwendung eines Fuzzy-Logik-Schemas lässt sich ein robustes Steuerungs- bzw. Regelungsschema realisieren, bei dem transiente Zustände in den solaren Einstrahlungsbedingungen insbesondere zu einer verringerten Schwankung der Ausgangstemperatur führen. Es wird eine dynamische Kontrolle des Eingangsventils über den Ausgabeparameter, welcher die Öffnung des Eingangsventils bestimmt, durchgeführt, wobei in dem zweiten Regelsatz die Verknüpfung mit der Fokussierung des mindestens einen Solarkollektors enthalten ist. Es lassen sich dadurch insbesondere exzessive Defokussierungen des mindestens einen Solarkollektors vermeiden und Instabilitäten in der Ausgangstemperatur können verringert werden.

Bei der erfindungsgemäßen Lösung wird auch die Tageszeit berücksichtigt, sodass auf einfache Weise eine Anpassung an individuelle Situationen wie den speziellen Standort des solarthermischen Kraftwerks möglich ist. Es lässt sich auf einfache Weise die Ausgangstemperatur stabil halten, um einen optimalen Betriebspunkt, auch unter wechselnden solaren Einstrahlungsbedingungen, zu erreichen.

Für jede Einheit lässt sich dabei die Steuerung bzw. Regelung individuell durchführen. Es lässt sich eine hohe Stabilität für eine Fokussierung von Solarkollektoren erreichen.

Weiterhin ergibt sich eine hohe Skalierbarkeit für ein System mit einer Mehrzahl von Einheiten.

Es lässt sich eine robuste und proaktive Steuerung bzw. Regelung bereitstellen, in welcher transiente Situationen bezüglich der solaren Einstrahlungsbedingungen optimiert erfassbar und ausgleichbar bzw. kompensierbar sind.

Mittels mindestens einem Ausgangsparameter wird die mindestens eine Einheit angesteuert und/oder eingestellt. Der entsprechende Ausgangsparameter definiert eine physikalische Größe, welche insbesondere direkt zur Einstellung des Eingangsventils der mindestens einen Einheit bzw. zur Einstellung des mindestens einen Solarkollektors bezüglich Fokussierung verwendet werden kann.

Insbesondere wird das erfindungsgemäße Verfahren auf Linearkollektoren angewendet, bei welchen eine Linienfokussierung erfolgt. Ein entsprechender Linearkollektor ist beispielsweise ein Parabol-Rinnenkollektor oder ein Fresnel-Rinnenkollektor.

Günstig ist es, wenn die mindestens eine Einheit eine Mehrzahl von in Reihe angeordneten Solarkollektoren umfasst. Dadurch lässt sich eine optimierte Steuerbarkeit bzw. Regelbarkeit erhalten. Das Wärmeträgermedium ist insbesondere ein einphasiges Fluid wie ein Öl oder eine Flüssigkeit. Es ist grundsätzlich auch möglich, dass das erfindungsgemäße Verfahren im Zusammenhang mit einer Direktverdampfung eingesetzt wird.

Ganz besonders vorteilhaft ist es, wenn jeder Solarkollektor einer Einheit individuell bezüglich des Fokussierungsparameters ansteuerbar ist und insbesondere individuell angesteuert und/oder eingestellt wird. Dadurch ergibt sich eine optimierte Anpassbarkeit. Weiterhin lässt sich eine exzessive Defokussierung vermeiden.

Günstig ist es, wenn die Eingangsparameter gemessen und/oder geschätzt werden. Daraus ergibt sich eine optimierte Grundlage für das Steuerungsverfahren bzw. Regelungsverfahren.

Es kann vorgesehen sein, dass die Größe, welche die Einstrahlungsbedingungen charakterisiert, in dem Solarfeld ortsabhängig ist. Bei einer Mehrzahl von Einheiten können dadurch die Größen, welche die Einstrahlungsbedingungen charakterisieren, bei unterschiedlichen Einheiten unterschiedlich sein. Der zweite Regelsatz bleibt dadurch unberührt, da das erfindungsgemäße Verfahren für jede Einheit anwendbar ist.

Es kann auch vorgesehen sein, dass die Größe, welche die Einstrahlungsbedingungen charakterisiert, für ein Solarfeld des solarthermischen Kraftwerks ermittelt wird, das heißt insbesondere global für das solarthermische Kraftwerk ermittelt wird. Beispielsweise ist die globale Größe für das Solarfeld ein Mittelwert über das ganze Solarfeld.

Bei einem Ausführungsbeispiel ist die Größe, welche die solaren Einstrahlungsbedingungen charakterisiert, ein Direktstrahlungsparameter. Als Größe wird insbesondere die DNI (Direct Normal Irradiance) verwendet. Dies ist die Menge an Solarstrahlung, welche pro Einheitsfläche durch eine Fläche empfangen wird, die senkrecht zu den Sonnenstrahlen ausgerichtet ist, die in direkter Linie von der Sonne her kommen, bezogen auf die gegenwärtige Stellung der Sonne am Himmel. Es ergibt sich dadurch ein definierter Parameter, welcher auf einfache Weise ermittelbar ist und insbesondere auf einfache Weise aufgrund von Erfahrungswerten schätzbar ist.

Günstig ist es, wenn ein Regelungsziel eine Einstellung der Ausgangstemperatur auf einen bestimmten Wert oder in einem bestimmten Wertebereich ist. Dieser bestimmte Wert bzw. dieser bestimmte Wertebereich ist eine optimierte Temperatur für den Betrieb des solarthermischen Kraftwerks und ist beispielsweise angepasst an eine Turbineneinrichtung.

Ganz besonders vorteilhaft ist es, wenn ein oder mehrere Eingangsparameter in Gruppen kategorisiert sind, welche insbesondere linguistisch definiert sind. Dadurch lässt sich auf optimierte Weise eine Steuerung bzw. Regelung aufgrund eines Fuzzy-Logik-Schemas durchführen.

Es ist dann günstig, wenn eine Gruppe eine ähnliche Anzahl diskreter Gruppenmitglieder aufweist. Es lässt sich dann auf einfache Weise über den ersten Regelsatz mit den entsprechenden Zugehörigkeitsfunktionen eine Abbildung jedes Eingangsparameters in eine entsprechende Fuzzy-Menge durchführen.

Beispielsweise weist die Gruppe "Tageszeit" die Gruppenmitglieder "Hochfahren", "Normalbetrieb", "Herunterfahren" auf. Dadurch lässt sich für die Tageszeit eine Abbildung auf drei diskrete Gruppenmitglieder erreichen und es lässt sich dadurch auf einfache Weise eine Fuzzifizierung durchführen.

Insbesondere sind der Öffnungsparameter und/oder der Fokussierungsparameter ein quantitativer Parameter, welcher direkt zur Einstellung der Einheit verwendet werden kann.

Bei einem Ausführungsbeispiel ist die Regelungsstrategie, dass die Steuerung und/oder Regelung mittels des Öffnungsparameters des Eingangsventils gegenüber dem Fokussierungsparameter priorisiert ist und insbesondere eine Fokussierung nur dann geändert wird, wenn das Eingangsventil vollständig offen ist. Dadurch lässt sich ein häufiges Defokussieren des mindestens einen Solarkollektors vermeiden.

Günstig ist es, wenn der zweite Regelsatz eine diskrete Anzahl von Regeln umfasst, wobei insbesondere die Anzahl von Regeln abhängig ist von der der Anzahl von Solarkollektoren in der mindestens einen Einheit. Dadurch ergibt sich eine optimierte Steuerbarkeit bzw. Regelbarkeit der mindestens einen Einheit. Der zweite Regelsatz ist ein Fuzzy-Logik-Regelsatz.

Ein erfindungsgemäßes solarthermisches Kraftwerk lässt sich mit dem erfindungsgemäßen Verfahren steuern bzw. regeln. Insbesondere weist es eine Steuerungs- und/oder Regelungseinrichtung auf, welche das erfindungsgemäße Verfahren durchführt bzw. an welcher das erfindungsgemäße Verfahren durchführbar ist.

Die nachfolgende Beschreibung bevorzugter Ausführungsformen dient im Zusammenhang mit den Zeichnungen der näheren Erläuterung der Erfindung. Es zeigen:
- Figur 1: eine schematische (Teil-)Darstellung eines Ausführungsbeispiels eines Solarfelds eines solarthermischen Kraftwerks;
- Figur 2: schematisch eine Steuerungs- und/oder Regelungseinrichtung des solarthermischen Kraftwerks gemäß Figur 1;
- Figur 3: schematisch in Blockschaltbildweise Hauptkomponenten eines Steuerungs- und/oder Regelungsverfahrens;
- Figur 4: bei einem konkreten Ausführungsbeispiel im Verlauf eines typischen Tages den Verlauf von solaren Einstrahlungsbedingungen (DNI) und mit einer Steuerung/Regelung einer entsprechenden Einheit des solarthermischen Kraftwerks gemäß Figur 1 den Verlauf einer Ausgangstemperatur Tₒᵤₜ;
- Figur 5: für einzelne Solarkollektoren einer Einheit den Verlauf von Fokussierungsänderungen über den Tag bei entsprechender Steuerung/Regelung mit solaren Einstrahlungsbedingungen wie in Figur 4;
- Figur 6: den Öffnungsparameter für ein Eingangsventil der entsprechenden Einheit über den Tag bei entsprechender Steuerung/Regelung mit solaren Einstrahlungsbedingungen wie in Figur 4;
- Figur 7: ein Ausführungsbeispiel für eine Gruppeneinteilung der Tageszeit und eine Fuzzifizierung;
- Figur 8: ein Ausführungsbeispiel für eine Gruppeneinteilung einer Ausgangstemperatur und deren Fuzzifizierung;
- Figur 9: ein Ausführungsbeispiel für eine Gruppeneinteilung der solaren Einstrahlungsbedingungen und ihre Fuzzifizierung;
- Figur 10: ein Ausführungsbeispiel für die Gruppeneinteilung einer Öffnungsfläche an einem Eingangsventil und deren Fuzzifizierung;
- Figur 11: ein Ausführungsbeispiel für einen (Fuzzy-Logik-)Regelsatz für das Hochfahren und das Herunterfahren einer Einheit;
- Figur 12: ein Ausführungsbeispiel für einen (Fuzzy-Logik-)Regelsatz beim normalen Betrieb;

- Figur 13: ein Ausführungsbeispiel für die Generierung eines Öffnungsparameters mittels Defuzzifizierung; und
- Figur 14: ein Ausführungsbeispiel für die Generierung eines Fokussierungsparameters mit Defuzzifizierung.

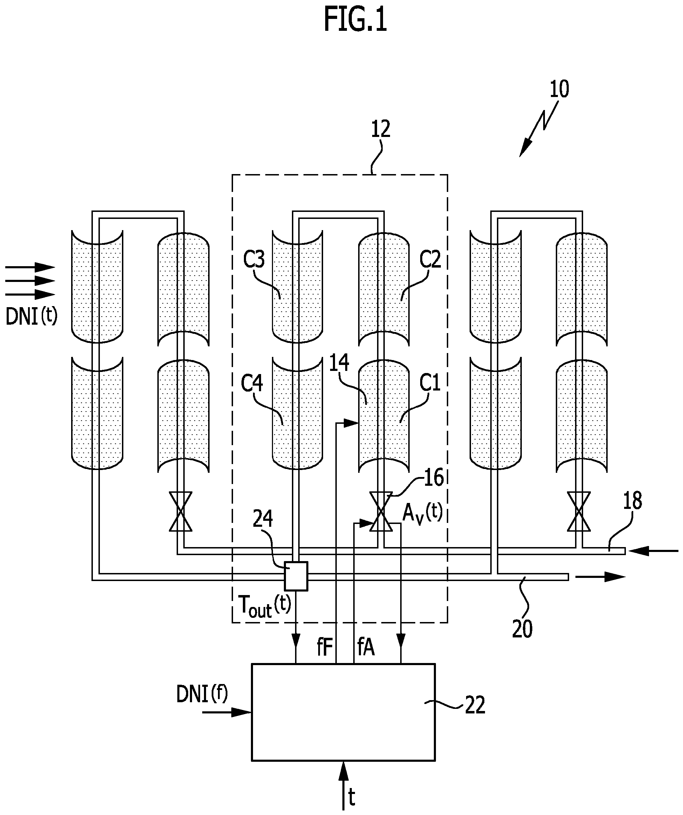

Ein Ausführungsbeispiel eines solarthermischen Kraftwerks, von dem eine Teilansicht in Figur 1 mit einem Solarfeld schematisch gezeigt ist, und mit 10 bezeichnet ist, umfasst eine Mehrzahl von Einheiten 12 ("Loops"). Grundsätzlich sind die entsprechenden Einheiten 12 gleich ausgebildet.

Eine Einheit 12 umfasst eine Mehrzahl von Solarkollektoren 14.

Die Solarkollektoren 14 einer Einheit 12 sind als Linearkollektoren ausgebildet, bei welchen Solarstrahlung längs einer Linie konzentriert wird. Wärmeträgerfluid, welches die Solarkollektoren 14 durchströmt, wird entsprechend aufgeheizt.

Ein Beispiel für Linearkollektoren sind Parabol-Rinnenkollektoren oder Fresnel-Kollektoren.

Die Solarkollektoren 14 der Einheit 12 sind in Reihe geschaltet angeordnet.

Die Einheit 12 weist ein Eingangsventil 16 auf, welches insbesondere steuerbar ist. Das Eingangsventil 16 bestimmt die Durchströmung der Einheit 12 mit der Mehrheit von Solarkollektoren 14 durch Wärmeträgerfluid.

Bei dem in Figur 1 gezeigten Ausführungsbeispiel weist die Einheit 12 vier Solarkollektoren 14 auf, welche mit C1, C2, C3 und C4 bezeichnet sind.

Die Einheit 12 kann dabei grundsätzlich als Verdampferabschnitt, Überhitzerabschnitt oder kombinierter Verdampferabschnitt und Überhitzerabschnitt ausgebildet sein.

Die Einheiten 12 sind an eine oder mehrere Zuführungsleitungen 18 gekoppelt, wobei die Einheit 12 über das Eingangsventil 16 an die Zuführungsleitung 18 angeschlossen ist.

Ferner sind die Einheiten 12 an eine oder mehrere Abführungsleitungen 20 gekoppelt.

Bei einem Ausführungsbeispiel führt insbesondere die Abführungsleitung 20 zu einer Turbineneinrichtung.

Das solarthermische Kraftwerk 10 umfasst eine Steuerungs- und/oder Regelungseinrichtung 22. Die Steuerungs- und/oder Regelungseinrichtung 22 umfasst insbesondere einen Unterabschnitt für jede Einheit 12.

Zur Steuerung bzw. Regelung einer Einheit 12 wird eine Tageszeit t erfasst. Ferner wird für die Einheit 12 ein Eingangsventilparameter Av in seiner Zeitabhängigkeit erfasst. Dieser Eingangsventilparameter charakterisiert eine Öffnungsfläche an dem Eingangsventil 16.

Ferner wird eine Ausgangstemperatur Tₒᵤₜ in seiner Zeitabhängigkeit erfasst. Die Ausgangstemperatur charakterisiert die Temperatur von Wärmeträgerfluid, welches die Einheit 12 durchströmt hat und in die Abführungsleitung 20 eingekoppelt wird. Das Wärmeträgerfluid ist insbesondere ein einphasiges Fluid wie ein Öl oder eine Salzschmelze.

Beispielsweise ist ein Temperatursensor 24 vorgesehen, welcher die Ausgangstemperatur Tₒᵤₜ nach Durchlaufen des letzten Solarkollektors C4 der Einheit 12 misst bzw. diese Temperatur vor Einkopplung in die Abführungsleitung 20 misst.

Ferner werden solare Einstrahlungsbedingungen an der Einheit 12 ermittelt. Insbesondere werden die solaren Einstrahlungsbedingungen "integral" über ein gesamtes Solarfeld des solarthermischen Kraftwerks 10 beispielsweise als Mittelwert über das Solarfeld ermittelt.

Bei einem Ausführungsbeispiel ist es vorgesehen, dass die direkte Normalstrahlung ermittelt wird. Die direkte Normalstrahlung (DNI - Direct Normal Irradiance) ist die Menge an Solarstrahlung, welche auf einer Einheitsfläche durch einen Flächenbereich empfangen wird, welcher senkrecht zu den Strahlen steht, welche in einer geraden Linie von der Sonnenrichtung her eintreffen.

Es kann beispielsweise vorgesehen sein, dass ein Parameter für die direkte Normalstrahlung gemäß üblichen Standort-Bedingungen abgeschätzt wird.

Es ist ein Regelungsziel der Steuerungs- und/oder Regelungseinrichtung 22, die Temperatur Tₒᵤₜ zumindest während einem Normalbetrieb ("Tagesbetrieb") des solarthermischen Kraftwerks 10 auf einer konstanten Temperatur bzw. in einem vorgegebenen Temperaturbereich zu halten, wobei die entsprechende Temperatur bzw. der entsprechende Temperaturbereich geeignet ist für beispielsweise einen Turbinenbetrieb, um einen effektiven Wirkungsgrad des solarthermischen Kraftwerks 10 zu erhalten.

Bei der erfindungsgemäßen Lösung, wie sie unten beschrieben wird, basiert die Steuerung und/oder Regelung auf den Eingangsparametern Tageszeit t, Eingangsventilparameter Av, solaren Einstrahlungsbedingungen DNI und Ausgangstemperatur Tₒᵤₜ.

Die Ausgabeparameter, gemäß denen die Einheit 12 "eingestellt wird", sind ein Öffnungsparameter fA für das entsprechende Eingangsventil 16 der Einheit 12 und ein Fokussierungsparameter fF. Der Öffnungsparameter fA führt zu einer Einstellung einer bestimmten Öffnungsweite an dem Eingangsventil 16. Der Fokussierungsparameter fF führt zu einer bestimmten Fokussierung an den jeweiligen Solarkollektoren 14 der Einheit 12.

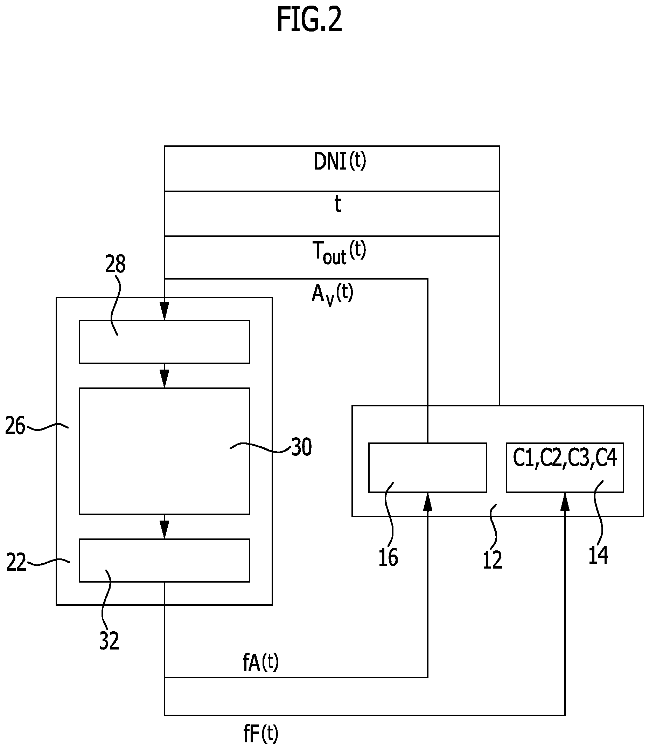

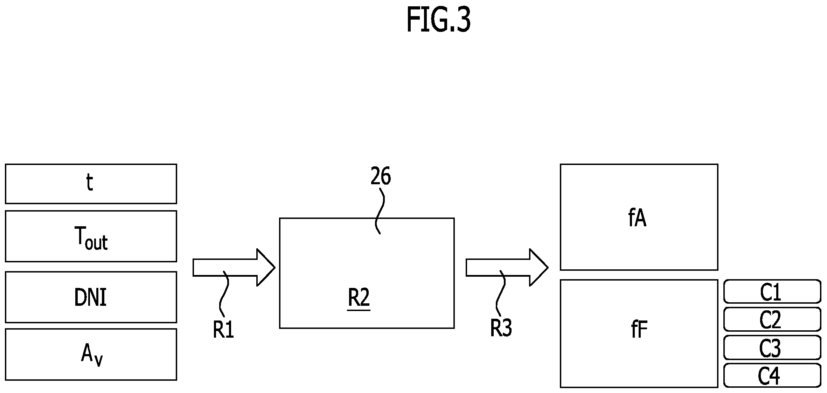

Die Steuerungs- und/oder Regelungseinrichtung 22 umfasst eine Fuzzy-Logik-Einheit 26 (Figuren 2, 3), welche eine Verknüpfung und Auswertung der genannten Eingangsparameter auf Grundlage der Fuzzy-Logik durchführt.

Die Fuzzy-Logik-Einheit 26 der Steuerungs- und/oder Regelungseinrichtung 22 umfasst dazu eine Fuzzifizierungseinrichtung 28. Die Fuzzifizierungseinrichtung 28 erzeugt aus den Eingangsparametern t, DNI, Tₒᵤₜ, Av gemäß einem ersten Regelungssatz R1 (vgl. Figur 3) Fuzzy-Mengen, das heißt bildet gemäß dem ersten Regelsatz die jeweiligen Eingangsparameter in Fuzzy-Mengen ab. Der jeweilige erste Regelsatz für die Abbildung entspricht einer Zugehörigkeitsfunktion der Fuzzifizierung, die entsprechende Objekte (die jeweiligen Eingangsparameter) auf die jeweiligen Fuzzy-Mengen abbildet.

Die Fuzzy-Logik-Einheit 26 der Steuerungs- und/oder Regelungseinrichtung 22 umfasst ferner eine Inferenzeinrichtung 30. Die Inferenzeinrichtung 30 verknüpft nach einem zweiten Regelsatz R2 (den Fuzzy-Regeln) Fuzzy-Mengen-Parameter, welche aus den unterschiedlichen Eingangsparametern erzeugt wurden, und wertet diese aus. Der zweite Regelsatz R2 enthält Fuzzy-Logik-Regeln.

Ferner umfasst die Fuzzy-Logik-Einheit 26 der Steuerungs- und/oder Regelungseinrichtung 22 eine Defuzzifizierungseinrichtung 32. Die Defuzzifizierungseinrichtung 32 sorgt gemäß einem dritten Regelsatz R3 für eine Umwandlung von entsprechenden erzeugten Fuzzy-Mengen-Ergebnisparametern, welche grundsätzlich Fuzzy-Zahlen sind, in Werte, welche für die Ansteuerung der Einheit 12 verwendet werden können, wobei bei der erfindungsgemäßen Lösung Werte für fA und fF erzeugt werden.

Es werden insbesondere individuelle Werte fF für alle Solarkollektoren 14 (C1, C2, C3, C4) der Einheit 12 erzeugt. Dies ist nochmals schematisch in Figur 3 erläutert; ausgehend von den Eingabeparametern Tageszeit t, Ausgangstemperatur Tₒᵤₜ, solaren Einstrahlungsbedingungen DNI und Eingangsventilparameter Av erzeugt die Fuzzy-Logik-Einheit 26 mittels eines Fuzzy-Logik-Verfahrens (mit Regelsatz R2) Ausgabeparameter, nämlich fA als Öffnungsparameter für das Eingangsventil 16 und fF als Fokussierungsparameter für die einzelnen Solarkollektoren 14 (C1, C2, C3, C4) der Einheit 12, welche für eine entsprechende Einstellung an der Einheit 12 sorgen.

Zur Abbildung auf Fuzzy-Logik-Mengen mittels dem ersten Regelsatz R1 (mittels den Zugehörigkeitsfunktionen) werden insbesondere die Eingangsparameter in jeweilige Gruppen charakterisiert, deren Gruppenmitglieder diskret sind und dabei insbesondere linguistisch definiert sind.

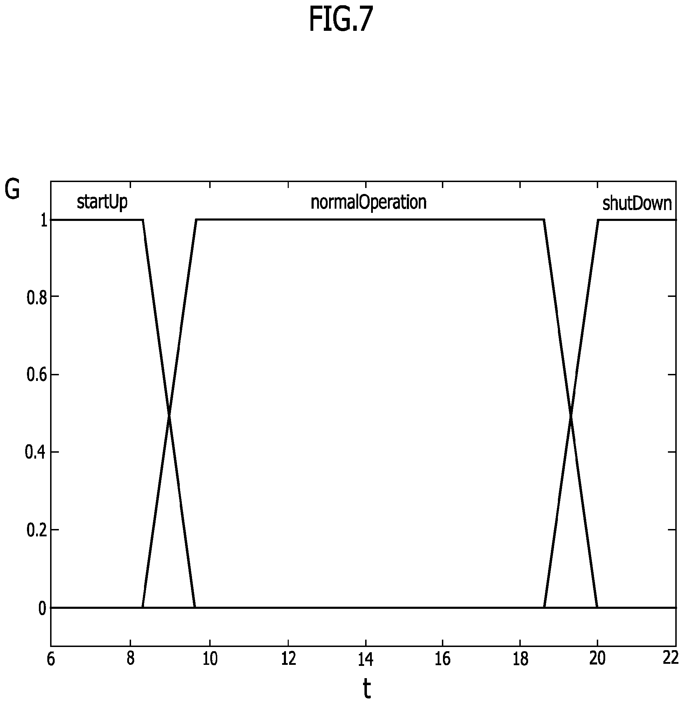

Bei einem Ausführungsbeispiel (Figur 7) wird die Tageszeit in eine Gruppe mit drei Gruppenmitgliedern "Hochfahren" (Start Up), "Normalbetrieb" (Normal Operation) und "Herunterfahren" (Shut Down) eingeteilt. Es werden dabei die üblichen Tageszeiten für den Standort des solarthermischen Kraftwerks 10 verwendet, bei welchen ein Normalbetrieb möglich ist. Diese üblichen Tageszeiten können sich dabei im Lauf des Jahres ändern.

Bei dem in Figur 7 gezeigten Ausführungsbeispiel liegt der "Normalbetrieb" (als Fuzzy-Menge mit unterschiedlichen Graden der Zugehörigkeit) bei einer Tageszeit zwischen ca. 8 Uhr morgens und 20 Uhr abends vor.

Figur 7 zeigt auch die Abbildung bezüglich dieser Gruppenmitglieder auf Fuzzy-Werte G aus dem Intervall zwischen (einschließlich) 0 und 1. Es wird dem Eingangsparameter Tageszeit nach Aufteilung in eine Gruppe mit diskreten Gruppenmitgliedern wie oben erwähnt über einen Ausschnitt aus dem ersten Regelsatz die entsprechende Fuzzy-Menge, wie in Figur 7 gezeigt, zugeordnet. Die dem Eingangsparameter "Tageszeit" zugeordnete Fuzzy-Menge ist eine entsprechende Tageszeit-Fuzzy-Menge.

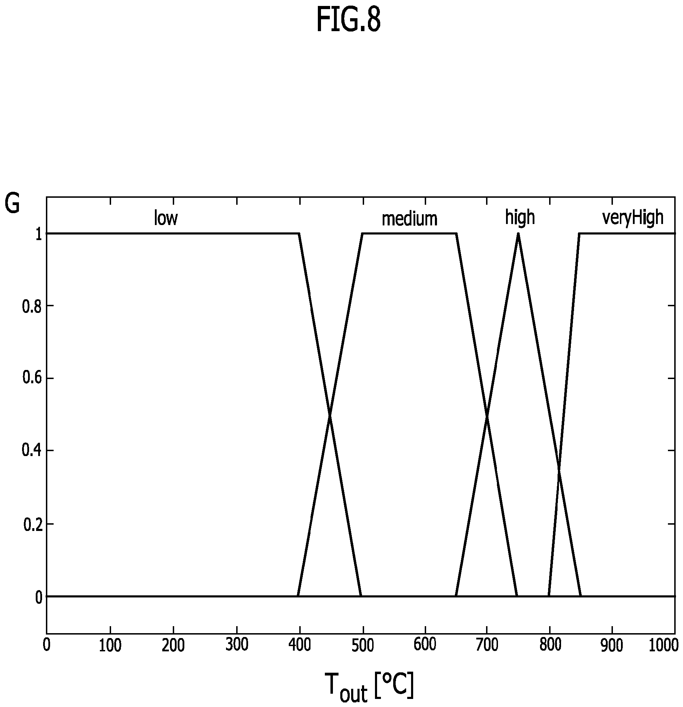

Bei einem Ausführungsbeispiel wird, wie in Figur 8 gezeigt, dem Eingangsparameter Ausgangstemperatur Tₒᵤₜ eine Gruppe mit den Gruppenmitgliedern Low, Medium, High, Very High zugeordnet. Über einen Ausschnitt aus dem ersten Regelsatz wird wiederum diesen linguistisch definierten diskreten Gruppenmitgliedern eine entsprechende Fuzzy-Menge (vergleiche Figur 8) zugeordnet. Es ergibt sich dann eine entsprechende Ausgangstemperatur-Fuzzy-Menge.

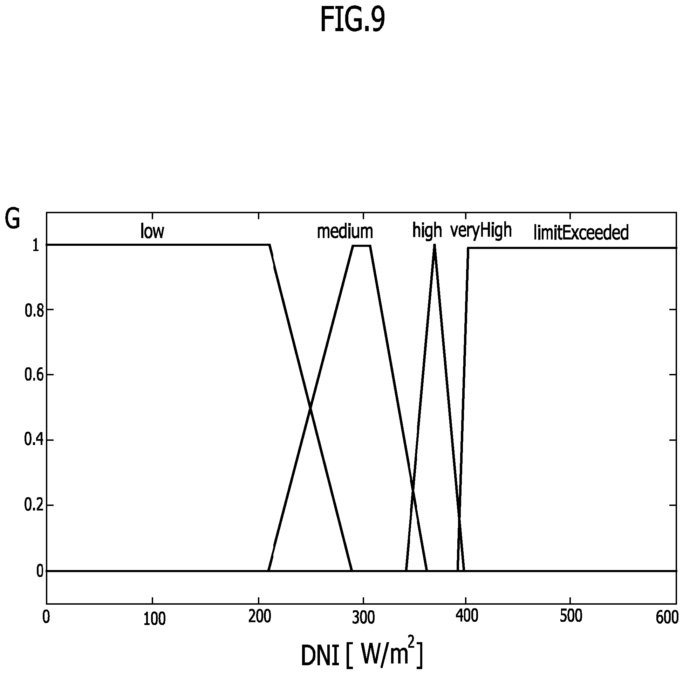

Weiterhin wird bei einem Ausführungsbeispiel (Figur 9) der Eingangsparameter DNI in die Gruppe mit den Gruppenmitgliedern Low, Medium, High, Very High, Limited Exceeded, eingeteilt. Diese Gruppenmitglieder sind diskret und dabei linguistisch definiert. Über einen entsprechenden Ausschnitt aus dem ersten Satz werden diese Gruppenmitglieder auf Fuzzy-Zahlen abgebildet (Figur 9). Es ergibt sich eine entsprechende Fuzzy-Menge für die solaren Einstrahlungsbedingungen.

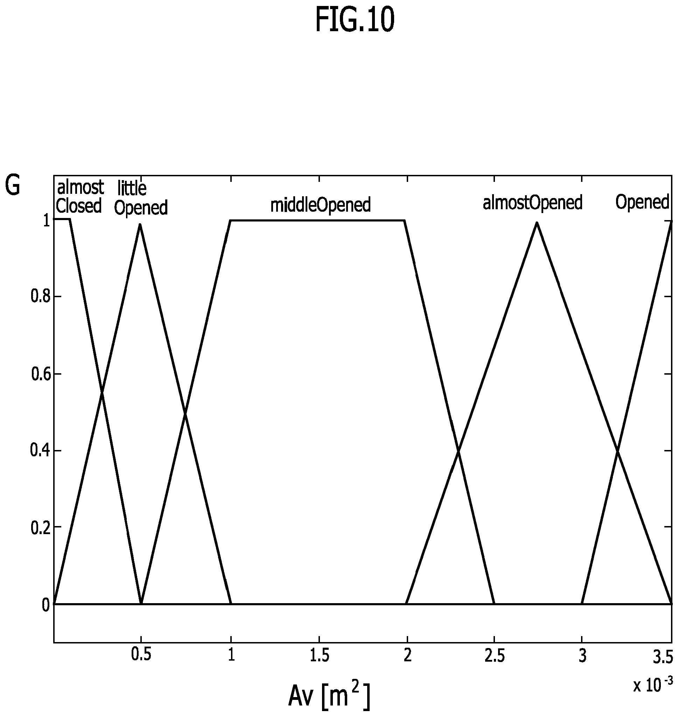

Weiterhin wird bei einem Ausführungsbeispiel der Eingangsventilparameter Av als Gruppe in mit diskreten, linguistisch definierten Gruppenmitgliedern eingeteilt. Bei dem Ausführungsbeispiel gemäß Figur 10 sind diese Gruppenmitglieder AlmostClosed, LittleOpened, MiddleOpened, AlmostOpened, Opened. Ein entsprechender Ausschnitt aus dem ersten Regelsatz (die entsprechenden Zugehörigkeitsfunktionen der Fuzzifizierung) bildet dann diese Gruppenmitglieder auf eine Fuzzy-Menge für den Eingangsventilparameter ab.

Die Fuzzifizierungseinrichtung 28 stellt damit aus den Eingangsparametern Fuzzy-Mengen-Parameter her, wobei für jeden Eingangsparameter unabhängig von den anderen Eingangsparametern gemäß einem entsprechenden Abschnitt aus dem ersten Regelsatz (den entsprechenden Zugehörigkeitsfunktionen) eine entsprechende Fuzzy-Menge hergestellt wird.

Die Eingangsparameter sind grundsätzlich messbare Größen, welche durch Messung ermittelt werden können oder auch abgeschätzt werden können, wie beispielsweise der Eingangsparameter DNI. Für eine Fuzzifizierung werden diese Eingangsparameter in jeweilige Gruppen mit diskreten Gruppenmitgliedern eingeteilt.

Die Inferenzeinrichtung 30 kann dann über Fuzzy-Logik-Operationen Fuzzy-Mengen-Parameter der Fuzzy-Mengen für die Eingangsparameter miteinander verknüpfen und auswerten. Dies erfolgt gemäß einem vorgegebenen zweiten Regelsatz (den eigentlichen Fuzzy-Regeln).

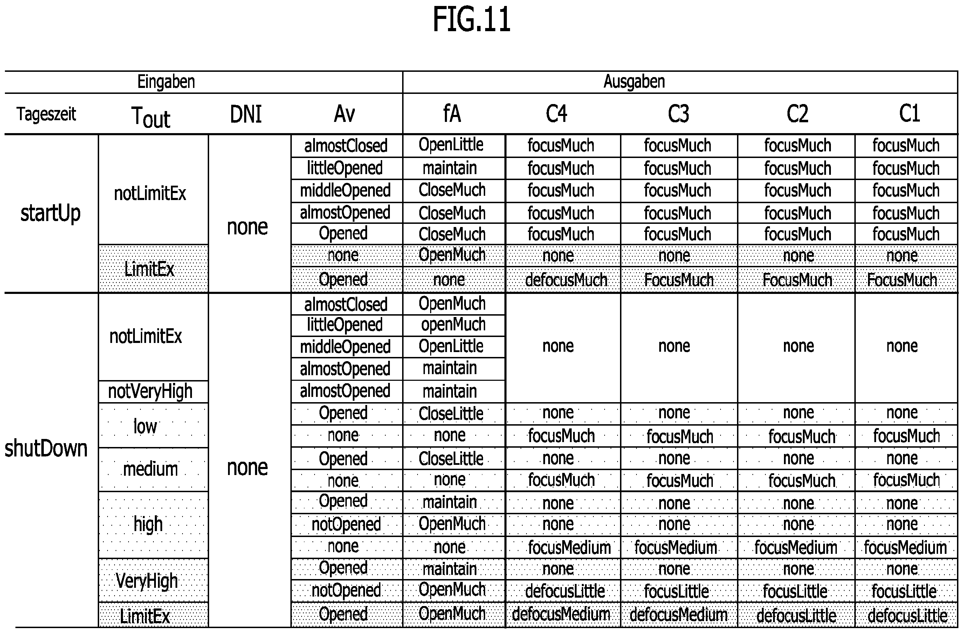

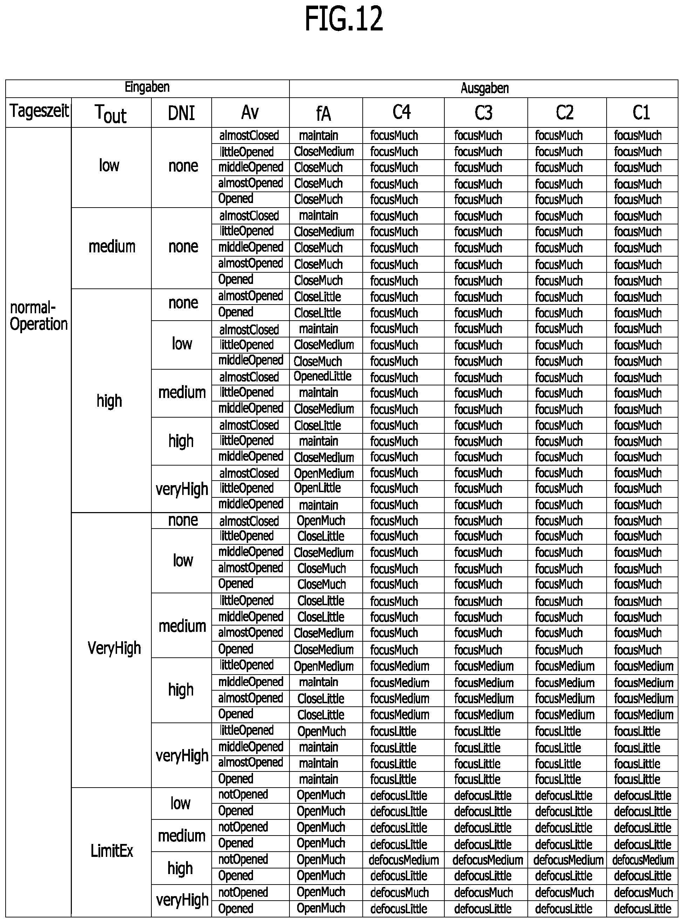

In den Figuren 11 und 12 ist ein Ausführungsbeispiel für einen Regelsatz angegeben, wobei in Abhängigkeit von Ergebnissen der entsprechenden Fuzzy-Mengen-Parameter bei geeigneter Verknüpfung Fuzzy-Mengen-Ergebnisparameter für die Ausgabeparameter vorgegeben sind.

In Figur 11 sind für das Hochfahren (Start Up) und das Herunterfahren (Shut Down) der entsprechenden Einheit 12 beispielhaft Regeln für Fuzzy-Mengen-Ergebnisparameter gezeigt, welche entsprechende Fuzzy-Mengen für den Öffnungsparameter und entsprechende Fuzzy-Mengen für den Fokussierungsparameter der einzelnen Solarkollektoren 14 (C1, C2, C3, C4) sind.

Die Anzahl der Regeln hängt dabei ab von der Anzahl der Solarkollektoren 14 einer Einheit 12. Bei dem gezeigten Ausführungsbeispiel mit vier Solarkollektoren 14 ist die Anzahl der Spalten in dem zweiten Regelsatz für die Fuzzy-Mengen-Ergebnisparameter fünf, nämlich vier Spalten für die Fokussierungsparameter entsprechend der Anzahl der Solarkollektoren 14 und eine Spalte für den Öffnungsparameter.

Grundsätzlich hängt die Anzahl der Regeln auch von der Anzahl der Eingangsgrößen und der Klassifizierung der Zugehörigkeitsfunktion für jede Eingangsgröße und Ausgangsgröße ab.

Die Tabellen gemäß den Figuren 11, 12, welche letztendlich den zweiten Regelsatz charakterisieren, sind beispielhaft für ein Ausführungsbeispiel. (Die Tabellen gemäß den Figuren 11, 12 bilden eigentlich eine Tabelle, welche aus darstellerischen Gründen auf zwei Tabellen aufgeteilt wurde.)

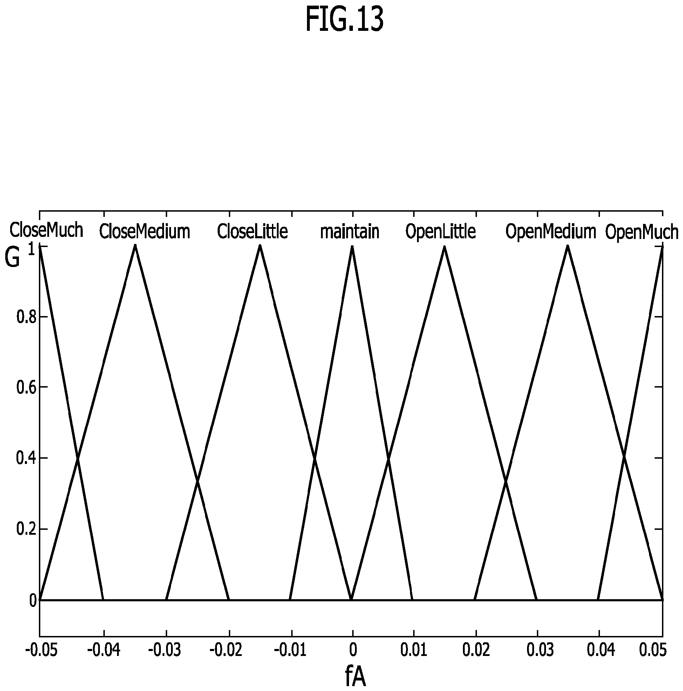

Die Defuzzifizierungseinrichtung 32 sorgt dann dafür, dass aus den Fuzzy-Mengen-Ergebnisparametern Ausgabeparameter erzeugt werden, welche geeignet sind zur Einstellung der Einheit 12. Dies erfolgt gemäß einem dritten Regelsatz (den Zugehörigkeitsfunktionen der Defuzzifizierung). In Figur 13 ist beispielhaft gezeigt, wie aus entsprechenden Werten G einer Fuzzy-Menge für den Ergebnisparameter Öffnungsparameter der Öffnungsparameter fA gewonnen wird, welcher "nutzbare" (defuzzifizierte) Werte umfasst, mit denen das Eingangsventil 16 direkt angesteuert werden kann.

Die Ergebnisparameter CloseMuch, CloseMedium, CloseLittle, maintain, OpenLittle, OpenMedium, OpenMuch weisen Fuzzy-Werte auf, welche dann durch die Defuzzifizierungseinrichtung 32 in nutzbare physikalische Werte gewandelt werden.

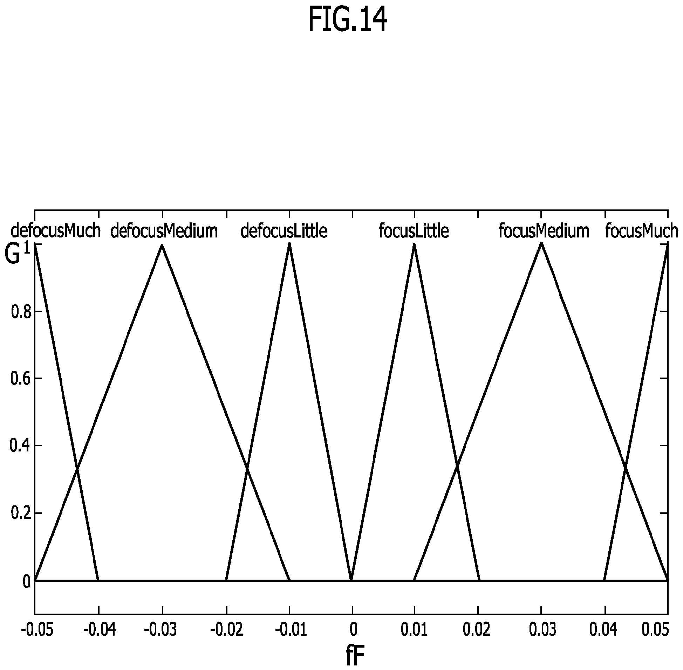

In Figur 14 ist gezeigt, wie gemäß einem Ausschnitt aus dem dritten Regelsatz aus Fuzzy-Mengen-Ergebnisparametern defocusMuch, defocusMedium, defocusLittle, focusLittle, focusMedium, focusMuch mit entsprechenden Fuzzy-Zahlen Ausgabeparameter fF als nutzbare physikalischen Größen zur Einstellung der Solarkollektoren 14 erzeugt werden.

Insbesondere der zweite Regelsatz (vergleiche die Figuren 11 und 12) für die Verknüpfung von Fuzzy-Zahlen der Fuzzy-Mengen und der Generierung von Fuzzy-Mengen-Ergebnisparametern unterliegt einer bestimmten Regelstrategie.

Erfindungsgemäß ist es vorgesehen, dass die Regelstrategie eine Konstanthaltung der Temperatur Tₒᵤₜ auf einem bestimmten Wert oder in einem bestimmten Wertebereich ist.

Grundsätzlich ist es vorgesehen, dass eine Steuerung bzw. Regelung des Eingangsventils 16 priorisiert ist. Es kann jedoch eine Defokussierung notwendig sein in unterschiedlichen Situationen, beispielsweise wenn eine Gefahr der Überhitzung besteht.

Es kann erfindungsgemäß vorgesehen sein, dass die Regelungsstrategie für den Fokussierungsparameter ist, dass eine Fokussierung der Solarkollektoren 14 so wenig wie möglich geändert wird und dass insbesondere eine Defokussierung aus einer 100-Prozent-Fokussierung nur dann stattfindet, wenn das Eingangsventil 16 vollständig geöffnet ist. (In diesem Sinne ist eigentlich der Fokussierungsparameter ein Defokussierungsparameter.)

Wie erwähnt, fließt diese Regelstrategie in die Aufstellung des zweiten Regelsatzes ein (beispielhaft in den Tabellen gemäß den Figuren 11 und 12 dargestellt).

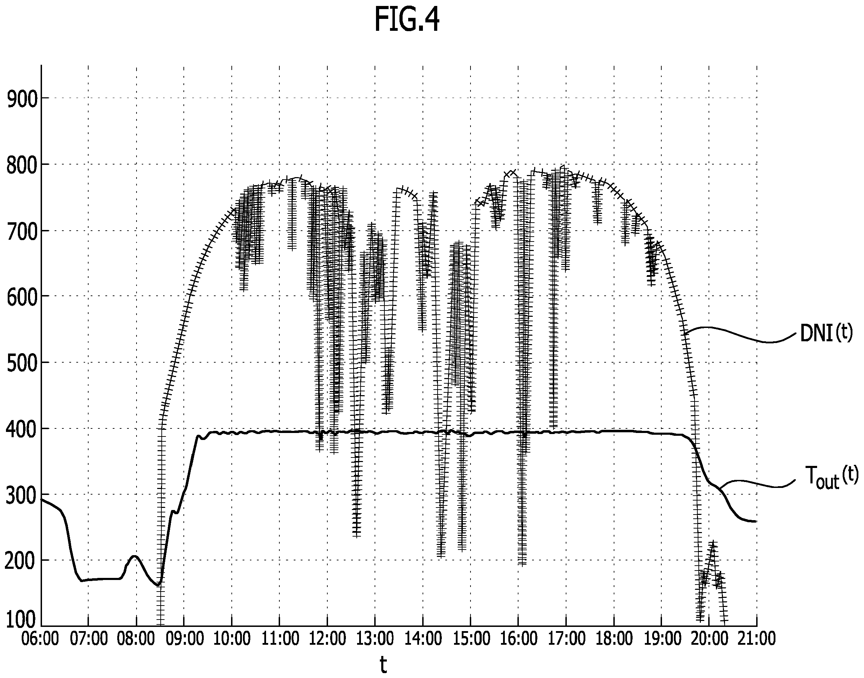

In den Figuren 4 bis 6 sind schematisch Verhältnisse gezeigt, welche sich bei der Durchführung des erfindungsgemäßen Verfahrens basierend auf Fuzzy-Logik ergeben.

Figur 4 zeigt in Abhängigkeit von der Tageszeit den Verlauf der solaren Einstrahlungsbedingungen als DNI. Diese wurden (als Ergebnis einer Simulation) künstlich modifiziert.

In Figur 4 ferner eingezeichnet ist die sich ergebende Ausgangstemperatur, wobei eine Steuerung bzw. Regelung nach dem erfindungsgemäßen Verfahren durchgeführt wurde, mit dem Ziel, diese Ausgangstemperatur Tₒᵤₜ möglichst konstant zu halten auf einen bestimmten Wert bzw. in einem bestimmten Wertebereich auch bei Änderungen der solaren Einstrahlungsbedingungen.

Das Steuerungsverfahren bzw. Regelungsverfahren wurde dabei mit dem ersten Regelsatz für die Fuzzifizierung (Zugehörigkeitsfunktion der Fuzzifizierung), welcher in den Figuren 7 bis 10 gezeigt ist, mit dem zweiten Regelsatz (den eigentlichen Fuzzy-Regeln) für die Inferenzeinrichtung 30, welche in den Figuren 11 und 12 gezeigt ist, und mit dem dritten Regelsatz (Zugehörigkeitsfunktion für Defuzzifizierung) für die Defuzzifizierung, welche in den Figuren 13 und 14 gezeigt ist, durchgeführt.

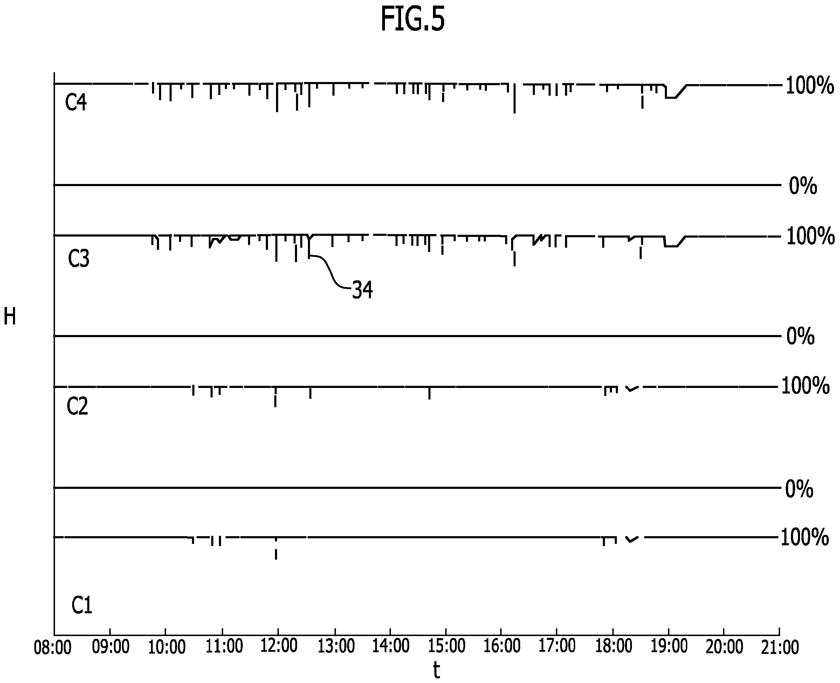

In Figur 5 sind für die individuellen Solarkollektoren 14 (C1, C2, C3, C4) sich ergebende Fokussierungsänderungen aufgrund Änderungen im Fokussierungsparameter fF gezeigt, wobei diese Änderungen dazu mit beitragen, dass die Temperatur Tₒᵤₜ gemäß Figur 4 mit guter Konstanz während des Normalbetriebs des solarthermischen Kraftwerks 10 konstant gehalten wird.

Es wurde dabei beispielsweise die Regelungsstrategie durchgeführt, dass ausgehend von einer vollständigen Fokussierung (100 Prozent) für die individuellen Solarkollektoren 14 eine Defokussierung durchgeführt wird, wenn das Eingangsventil 16 vollständig offen ist, wobei eine Steuerung/Regelung des Eingangsventils 16 bezüglich Defokussierung priorisiert ist.

Der Fokussierungsparameter fF gemäß Figur 14 gibt einen Anteil bezüglich der Fokussierung oder Defokussierung an.

In Figur 5 zeigen Abweichungen wie beispielhaft die Abweichungen 34 eine Defokussierung. Wie erwähnt, ergeben sich diese Defokussierungen, welche über die Steuerungs- und/oder Regelungseinrichtung 22 explizit an die Solarkollektoren durchgeführt werden, aus dem Steuerungs- bzw. Regelungsverfahren.

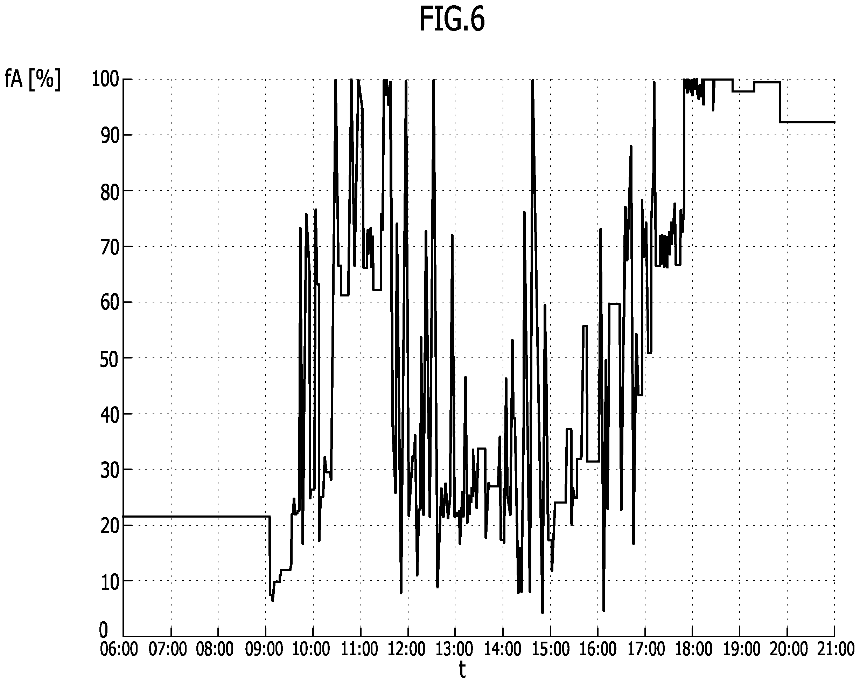

In Figur 6 ist das Ergebnis für den Öffnungsparameter des Eingangsventils 16 gezeigt, gemäß welchem das Eingangsventil 16 angesteuert wird. Eine Angabe von 100 Prozent bedeutet dabei eine vollständige Öffnung des Eingangsventils 16.

Man sieht, dass während des Normalbetriebsmodus des solarthermischen Kraftwerks 10 mit der Einheit 12 bei Schwankungen der solaren Einstrahlungsbedingungen DNI gemäß dem erfindungsgemäßen Steuerungs- und/oder Regelungsverfahren der Parameter fA entsprechend bestimmt wird und variiert wird.

Erfindungsgemäß wird ein Steuerungs- und/oder Regelungsverfahren bereitgestellt, bei welchem als Eingangsparameter (mindestens) die Parameter Tageszeit, Ausgangstemperatur, solare Einstrahlungsbedingungen DNI und Eingangsventilparameter verwendet werden, an diesen jeweils eine Gruppeneinteilung mit diskreten Gruppenmitgliedern erfolgt und dann nach Fuzzifizierung an der Fuzzy-Logik-Einheit 26 eine entsprechende Verknüpfung und Auswertung erfolgt. Anschließend wird eine Defuzzifizierung durchgeführt. Es ergeben sich dann (mindestens) als Ausgabeparameter ein Öffnungsparameter für das Eingangsventil 16 und ein Fokussierungsparameter für die jeweiligen Solarkollektoren 14, mit denen dann die Einheit 12 angesteuert wird.

Die solaren Einstrahlungsbedingungen, für die DNI ein Maß ist, ändern sich auf einer täglichen und auf einer saisonalen Basis und sind grundsätzlich nicht beeinflussbar. Beispielsweise vorbeiziehende Wolken, atmosphärische Feuchtigkeit und Lufttransparenz beeinflussen die solaren Einstrahlungsbedingungen. Unter Zugrundlegung eines Fuzzy-Logik-Schemas können die genannten Eingangsparameter miteinander verknüpft werden und die entsprechenden Ausgangsparameter erzeugt werden. Es ergibt sich dadurch eine verbesserte Solarfeldkontrolle. Es lässt sich ein robustes Steuerungs- bzw. Regelungsschema realisieren, welches in eine vorhandene Steuerung bzw. Regelung integriert werden kann. Es können auch spezielle Kenntnisse von Operatoren für die jeweilige Einheit 12 auf leichte Weise miteingebunden werden.

Beispielsweise können die Regelsätze für das Gesamtverfahren (erster Regelsatz, zweiter Regelsatz, dritter Regelsatz) auf einfache Weise mit einem Software-Paket wie "MATLAB" umgesetzt werden. (MATLAB ist eine registrierte Unionsmarke von "The Mathworks, Inc.", 3 Apple Hill Drive, Natick, Massachusetts 01760, USA.)

Es lässt sich gezielt eine optimierte Ausgangstemperatur Tₒᵤₜ einstellen. Oszillationen in der Ausgangstemperatur lassen sich gering halten. Durch Verwendung eines Fuzzy-Logik-Schemas lassen sich auch qualitative Regeln, die nicht quantitativ erfassbar sind, berücksichtigen. Es lassen sich Nicht-Linearitäten berücksichtigen. Es lässt sich auch ein bestimmtes Maß an Ungenauigkeit und Unsicherheit berücksichtigen.

Es lässt sich insbesondere über den zweiten Regelsatz (den eigentlichen Fuzzy-Regeln) eine Verknüpfung zwischen einer dynamischen Ventilkontrolle des Eingangsventils 16 und einer Kollektorfokussierung der Solarkollektoren 14 durchführen. Beispielsweise lässt sich durch Hinzuziehen des Eingangsparameters Tageszeit auf einfache Weise der Standort des solarthermischen Kraftwerks 10 und auch die jahreszeitlichen Veränderungen berücksichtigen. Dadurch wiederum ist es möglich, eine exzessive Defokussierung an den Solarkollektoren 14 zu vermeiden und daraus resultierende Instabilitäten in der Ausgangstemperatur zu verhindern.

Die Steuerungs- und/oder Regelungseinrichtung 22 mit der Fuzzy-Logik-Einheit 26 ist robust gegenüber Variationen und proaktiv, das heißt reagiert nicht nur auf transiente Situationen.

Es ergibt sich ferner eine hohe Skalierbarkeit, da sich die gleiche Steuerungs- bzw. Regelungsstrategie auf entsprechende Einheiten 12 anwenden lässt und dadurch die Steuerungs- bzw. Regelungsstrategie für jede gleich aufgebaute Einheit 12 im Wesentlichen gleich ist.

### Bezugszeichenliste

- 10: Solarthermisches Kraftwerk
- 12: Einheit
- 14: Solarkollektoren
- 16: Eingangsventil
- 18: Zuführungsleitung
- 20: Abführungsleitung
- 22: Steuerungs- und/oder Regelungseinrichtung
- 24: Temperatursensor
- 26: Fuzzy-Logik-Einheit
- 28: Fuzzifizierungseinrichtung
- 30: Inferenzeinrichtung
- 32: Defuzzifizierungseinrichtung
- 34: Abweichung
- R1: Erster Regelsatz
- R2: Zweiter Regelsatz
- R3: Dritter Regelsatz

## Patentansprüche

1. Verfahren zur Steuerung und/oder Regelung eines solarthermischen Kraftwerks (10), welches mindestens eine Einheit (12) mit einem Eingangsventil (16) und mit einem Solarkollektor (14) umfasst, bei dem für die mindestens eine Einheit Eingangsparameter erfasst werden, welche umfassen:
(i) eine Tageszeit (t),
(ii) eine Temperatur (Tₒᵤₜ), welche eine Ausgangstemperatur von Wärmeträgerfluid an der mindestens einen Einheit (12) charakterisiert,
(iii) eine Größe (DNI), welche solare Einstrahlungsbedingungen charakterisiert, und
(iv) einen Eingangsventilparameter (Av), welcher eine Öffnungsfläche an dem Eingangsventil (16) charakterisiert,
wobei den Eingangsparametern in einer Fuzzifizierungseinrichtung (28) gemäß einem ersten Regelsatz (R1) jeweilige Fuzzy-Mengen-Parameter zugordnet werden, eine Inferenzeinrichtung (30) die Fuzzy-Mengen-Parameter gemäß einem zweiten Regelsatz (R2) verknüpft und auswertet und Fuzzy-Mengen-Ergebnisparameter erzeugt werden, und in einer Defuzzifizierungseinrichtung (32) aus Fuzzy-Mengen-Ergebnisparametern Ausgabeparameter gemäß einem dritten Regelsatz (R3) erzeugt werden, welche umfassen:
(i) einen Öffnungsparameter (fA), welcher eine Öffnung des Eingangsventils (16) bestimmt, und
(ii) einen Fokussierungsparameter (fF), welcher eine Fokussierung des mindestens einen Solarkollektors (14) bestimmt;
und bei dem mittels mindestens einem Ausgangsparameter die mindestens eine Einheit (12) angesteuert und/oder eingestellt wird.

2. Verfahren nach Anspruch 1, **dadurch gekennzeichnet, dass** der mindestens eine Solarkollektor (14) ein Linearkollektor ist.

3. Verfahren nach einem der vorangehenden Ansprüche, **dadurch gekennzeichnet, dass** die mindestens eine Einheit (12) eine Mehrzahl von in Reihe angeordneten Solarkollektoren (14) umfasst, und insbesondere, dass jeder Solarkollektor (14) einer Einheit (12) individuell bezüglich des Fokussierungsparameters ansteuerbar ist und insbesondere individuell angesteuert und/oder eingestellt wird.

4. Verfahren nach einem der vorangehenden Ansprüche, **dadurch gekennzeichnet, dass** die Eingangsparameter gemessen und/oder geschätzt werden.

5. Verfahren nach einem der vorangehenden Ansprüche, **dadurch gekennzeichnet, dass** die Größe (DNI), welche die Einstrahlungsbedingungen charakterisiert, für ein Solarfeld des solarthermischen Kraftwerks (10) ermittelt wird.

6. Verfahren nach einem der vorangehenden Ansprüche, **dadurch gekennzeichnet, dass** die Größe (DNI), welche die solaren Einstrahlungsbedingungen charakterisiert, ein Direktstrahlungsparameter ist.

7. Verfahren nach einem der vorangehenden Ansprüche, **dadurch gekennzeichnet, dass** ein Regelungsziel eine Einstellung der Ausgangstemperatur auf einen bestimmten Wert oder in einem bestimmten Wertebereich ist.

8. Verfahren nach einem der vorangehenden Ansprüche, **dadurch gekennzeichnet, dass** ein oder mehrere Eingangsparameter in Gruppen kategorisiert sind, welche insbesondere linguistisch definiert sind.

9. Verfahren nach Anspruch 8, **dadurch gekennzeichnet, dass** eine Gruppe eine endliche Anzahl diskreter Gruppenmitglieder aufweist.

10. Verfahren nach Anspruch 8 oder 9, **dadurch gekennzeichnet, dass** die Gruppe "Tageszeit" die Gruppenmitglieder "Hochfahren", "Normalbetrieb", "Herunterfahren" umfasst.

11. Verfahren nach einem der vorangehenden Ansprüche, **dadurch gekennzeichnet, dass** der Öffnungsparameter (fA) und/oder der Fokussierungsparameter (fF) ein quantitativer Parameter ist.

12. Verfahren nach einem der vorangehenden Ansprüche, **dadurch gekennzeichnet, dass** die Steuerung und/oder Regelung mittels des Öffnungsparameters des Eingangsventils (16) gegenüber dem Fokussierungsparameter (fF) priorisiert ist und insbesondere eine Fokussierung nur dann geändert wird, wenn das Eingangsventil (16) vollständig offen ist.

13. Verfahren nach einem der vorangehenden Ansprüche, **dadurch gekennzeichnet, dass** der zweite Regelsatz (R2) eine diskrete Anzahl von Regeln umfasst, wobei insbesondere die Anzahl von Regeln abhängig ist von der Anzahl an Solarkollektoren (14) in der mindestens einen Einheit (12).

14. Solarthermisches Kraftwerk (10), umfassend mindestens eine Einheit (12) mit einem Eingangsventil (16) und mit mindestens einem Solarkollektor (14), und eine Steuerungs- und/oder Regelungseinrichtung (22), welche die mindestens eine Einheit (12) nach dem Verfahren gemäß einem der vorangehenden Ansprüche steuert und/oder regelt.

## Claims

1. A method for control of a solar thermal power plant (10) which comprises at least one unit (12) with an input valve (16) and with a solar collector (14), in which method input parameters are detected for the at least one unit, said input parameters comprising
(i) a time (t) of day,
(ii) a temperature (Tₒᵤₜ) which characterises an output temperature of heat transfer fluid at the at least one unit (12),
(iii) a variable (DNI) which characterises solar radiation conditions, and
(iv) an input valve parameter (Av) which characterises an aperture opening at the input valve (16),
respective fuzzy set parameters are assigned to the input parameters according to a first rule set (R1) in a fuzzification device (28), an inference device (30) links and evaluates the fuzzy set parameters according to a second rule set (R2) and fuzzy set result parameters are produced, and output parameters are produced from fuzzy set result parameters according to a third rule set (R3) in a defuzzification device (32), said output parameters comprising
(i) an opening parameter (fA) which defines an opening (16) of the input valve, and
(ii) a focussing parameter (fF) which defines a focussing of the at least one solar collector (14);
and in which the at least one unit (12) is controlled and/or adjusted by means of at least one output parameter.

2. A method according to claim 1, **characterised in that** the at least one solar collector (14) is a linear collector.

3. A method according to either one of the preceding claims, **characterised in that** the at least one unit (12) comprises a plurality of solar collectors (14) arranged in a row, and in particular **in that** each solar collector (14) of a unit (12) is controllable individually in respect of the focussing parameter, and in particular is controlled and/or adjusted individually.

4. A method according to any one of the preceding claims, **characterised in that** the input parameters are measured and/or estimated.

5. A method according to any one of the preceding claims, **characterised in that** the variable (DNI) that characterises the radiation conditions is determined for a solar field of the solar thermal power plant (10).

6. A method according to any one of the preceding claims, **characterised in that** the variable (DNI) that characterises the solar radiation conditions is a direct radiation parameter.

7. A method according to any one of the preceding claims, **characterised in that** a control objective is an adjustment of the output temperature to a specific value or within a specific value range.

8. A method according to any one of the preceding claims, **characterised in that** one or more input parameters are categorised in groups which in particular are defined linguistically.

9. A method according to claim 8, **characterised in that** a group has a finite number of discrete group members.

10. A method according to claim 8 or 9, **characterised in that** the group "time of day" comprises the group members "Start Up", "Normal Operation", "Shut Down".

11. A method according to any one of the preceding claims, **characterised in that** the opening parameter (fA) and/or the focussing parameter (fF) is a quantitative parameter.

12. A method according to any one of the preceding claims, **characterised in that** the control by means of the opening parameter of the input valve (16) is prioritised over the focussing parameter (fF), and in particular a focussing is changed only if the input valve (16) is fully open.

13. A method according to any one of the preceding claims, **characterised in that** the second rule set (R2) comprises a discrete number of rules, wherein in particular the number of rules is dependent on the number of solar collectors (14) in the at least one unit (12).

14. A solar thermal power plant (10), comprising at least one unit (12) with an input valve (16) and with at least one solar collector (14), and a control device (22) which controls the at least one unit (12) by open- and/or closed loop control by the method according to any one of the preceding claims.

## Revendications

1. Procédé de commande et/ou de régulation d'une centrale solaire thermique (10), laquelle comprend au moins une unité (12) avec une vanne d'entrée (16) et avec un collecteur solaire (14), où sont détectés pour l'au moins une unité des paramètres d'entrée, lesquels comprennent :
(i) une heure (t),
(ii) une température (Tₒᵤₜ), laquelle caractérise une température de sortie d'un fluide caloporteur sur l'au moins une unité (12),
(iii) une grandeur (DNI), laquelle caractérise des conditions solaires de rayonnement, et
(iv) un paramètre de vanne d'entrée (Av), lequel caractérise une surface d'ouverture sur la vanne d'entrée (16),
dans lequel des paramètres d'ensembles flous respectifs sont associés aux paramètres d'entrée dans un système de conversion à la logique floue (28) selon un premier ensemble de règles (R1), un système d'interférence (30) combine et analyse les paramètres d'ensembles flous selon un deuxième ensemble de règles (R2) et des paramètres résultants d'ensembles flous sont générés, et sont générés dans un système de conversion inverse (32), à partir de paramètres résultants d'ensembles flous, selon un troisième ensemble de règles (R3), des paramètres de sortie, lesquels comprennent :
(i) un paramètre d'ouverture (fA), lequel définit une ouverture de la vanne d'entrée (16), et
(ii) un paramètre de mise au point focale (fF), lequel définit une mise au point focale de l'au moins un collecteur solaire (14) ;
et où l'au moins une unité (12) est pilotée et/ou réglée au moyen d'au moins un paramètre de sortie.

2. Procédé selon la revendication 1, **caractérisé en ce que** l'au moins un collecteur solaire (14) est un collecteur linéaire.

3. Procédé selon l'une quelconque des revendications précédentes, **caractérisé en ce que** l'au moins une unité (12) comprend une multitude de collecteurs solaires (14) disposés de manière alignée, et en particulier **en ce que** chaque collecteur solaire (14) d'une unité (12) peut être piloté individuellement concernant le paramètre de mise au point focale et est piloté et/ou réglé en particulier individuellement.

4. Procédé selon l'une quelconque des revendications précédentes, **caractérisé en ce que** les paramètres d'entrée sont mesurés et/ou évalués.

5. Procédé selon l'une quelconque des revendications précédentes, **caractérisé en ce que** la grandeur (DNI), laquelle caractéristique les conditions de rayonnement, est déterminée pour un champ solaire de la centrale solaire thermique (10).

6. Procédé selon l'une quelconque des revendications précédentes, **caractérisé en ce que** la grandeur (DNI), laquelle caractérise les conditions solaires de rayonnement, est un paramètre de rayonnement direct.

7. Procédé selon l'une quelconque des revendications précédentes, **caractérisé en ce qu'**un objectif de régulation est un réglage de la température de sortie sur une valeur définie ou dans une plage de valeurs définie.

8. Procédé selon l'une quelconque des revendications précédentes, **caractérisé en ce qu'**un ou plusieurs paramètres d'entrée sont catégorisés en groupes, lesquels sont définis en particulier sur le plan linguistique.

9. Procédé selon la revendication 8, **caractérisé en ce qu'**un groupe présente un nombre limité d'éléments de groupe discrets.

10. Procédé selon la revendication 8 ou 9, **caractérisé en ce que** le groupe « heure » comprend les éléments de groupe « démarrage », « fonctionnement normal », « arrêt ».

11. Procédé selon l'une quelconque des revendications précédentes, **caractérisé en ce que** le paramètre d'ouverture (fA) et/ou le paramètre de mise au point focale (fF) sont des paramètres quantitatifs.

12. Procédé selon l'une quelconque des revendications précédentes, **caractérisé en ce que** la commande et/ou la régulation sont priorisées par rapport au paramètre de mise au point focale (fF) au moyen du paramètre d'ouverture de la vanne d'entrée (16) et en particulier une mise au point focale n'est changée que lorsque la vanne d'entrée (16) est totalement ouverte.

13. Procédé selon l'une quelconque des revendications précédentes, **caractérisé en ce que** le deuxième ensemble de règles (R2) comprend un nombre discret de règles, dans lequel en particulier le nombre de règles dépend du nombre de collecteurs solaires (14) dans l'au moins une unité (12).

14. Centrale solaire thermique (10) comprenant au moins une unité (12) avec une vanne d'entrée (16) et avec au moins un collecteur solaire (14), et un système de commande et/ou de régulation (22), lequel commande et/ou régule l'au moins une unité (12) selon le procédé selon l'une quelconque des revendications précédentes.
